# EUROPEAN PATENT APPLICATION

(11) **EP 2 720 483 A1**
(43) Date of publication of application: **16.04.2014**
(21) Application number: 12187821.9
(22) Date of filing: 09.10.2012
(51) Int. Cl.: H04W 16/14, H04W 72/10, H04W 72/12

(54) **Apparatus and method for assigning resource blocks of an air interface**

(71) Applicant: NTT DOCOMO, INC., Tokyo 100-6150 (JP)
(72) Inventor: Kiess, Wolfgang, 81373 München (DE); Weitkemper, Petra, 82110 Germering (DE)
(74) Representative: Zinkler, Franz

(57) **Abstract**

An apparatus for assigning resource blocks of an air interface to a plurality of different receivers, comprises: a first quality of service processor (101), wherein the first quality of service processor (101) is configured for assigning priorities to a first group of receivers associated with the first quality of service processor (101); a second quality of service processor (102), wherein the second quality of service processor (102) is configured for assigning second priorities to a second group of receivers, the second group being different from the first group; and a scheduler (105) for scheduling individual resource blocks to the first group of receivers and the second group of receivers based on the assigned first and second priorities.

## Description

The present invention is related to mobile communications, and particularly to a task of assigning resource blocks of an air interface to a plurality of different receivers.

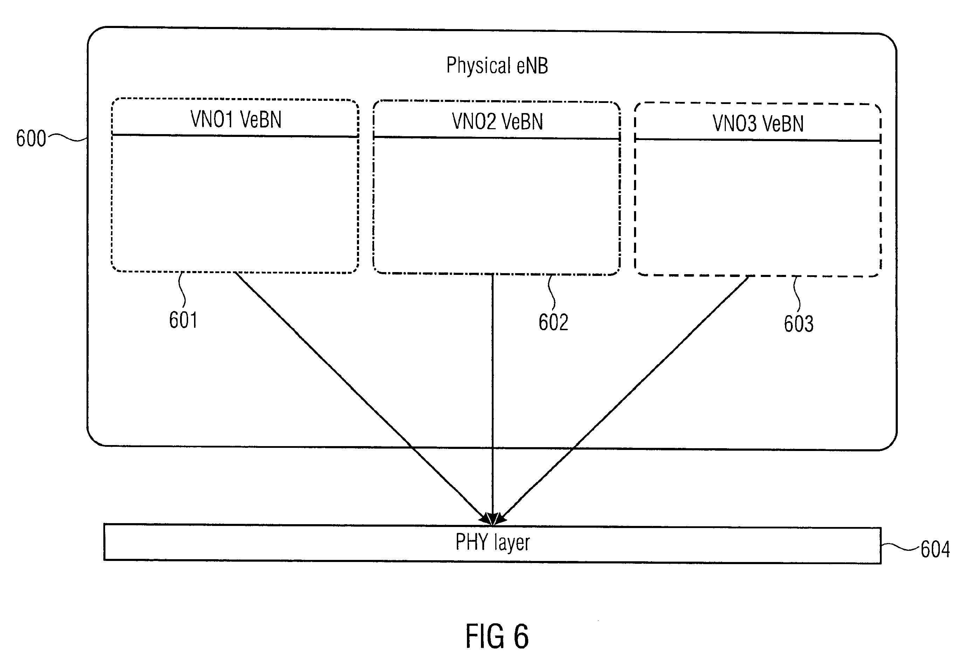

Fig. 6 illustrates a target configuration, in which there is one physical eNB 600 that hosts multiple virtual base stations (VeNBs) illustrated at 601, 602, 603 from different virtual network operators VNOs. Particularly, the first virtual base station 601 is owned by the virtual network operator VNO1. Furthermore, the second virtual base station VeNB 602 is owned by the second virtual network operator, and the third virtual base station VeNB 603 is owned by the third virtual network operator VNO3. All three virtual network operators access the same physical layer 604.

In order to implement such a virtualized eNB, reference is made to the concept of an OFDM based air interface virtualization as, for example, illustrated in Y. Zaki, L. Zhao, C. Georg, and A. Timm-giel, "A Novel LTE Wireless Virtualization Framework," in Monami'10: Proceedings of the Second International ICST Conference on Mobile Networks And Management, 2010, no. 1.

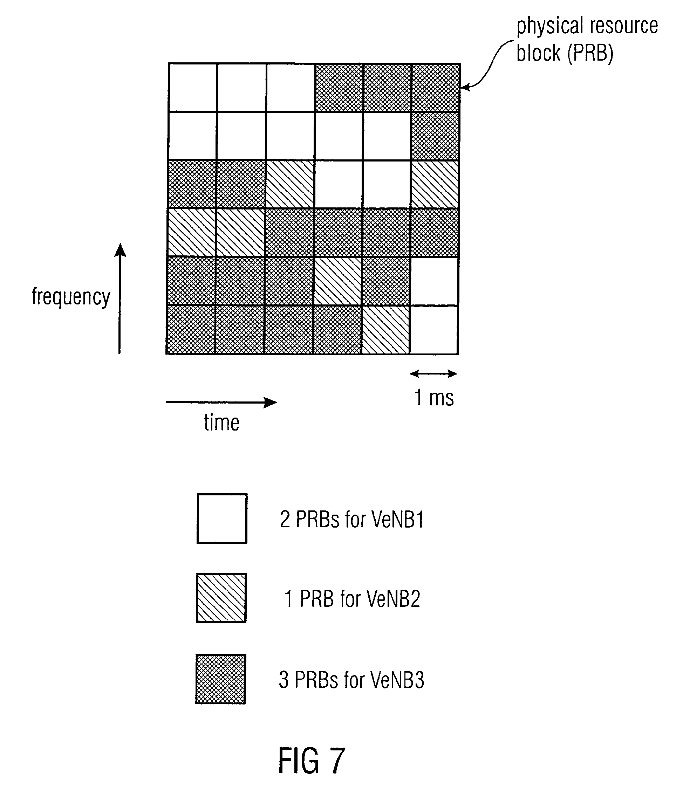

In an OFDM system, like LTE or LTE-advanced, the wireless link resources can be scheduled with the granularity of a physical resource block (PRB). In LTE, a PRB corresponds to a timeslot of 1 ms in the time domain and 12 subcarriers in the frequency domain. The idea behind OFDM based air interface virtualization is to have the scheduler of the base station assign these PRBs to the different sharing operators depending on their needs. In Fig. 7 a scenario where each operator is assigned a fixed number of such PRBs per period is shown. VNO1 gets 2 PRBs, VNO2 gets 1 PRB and VNO3 gets 3 PRBs.

This configuration allows to realize a so called diversity gain as the scheduler has more PRBs to choose from when assigning them to the different user equipments (UEs, i.e. handset devices like mobile phones) compared to the case when each operator can only select from his own PRBs. The motivation for this is that the quality of a radio layer channel for a UE strongly depends on the subcarrier: while it may be very good at a subcarrier A, it can be very bad at another subcarrier B. As this depends on the position of the UE, this channel quality tends to be completely different for each UE. In the configuration shown in Fig. 7 (although each operator gets a fixed amount of PRBs), the PRBs can be assigned to UE transmission such that they lie on subcarriers with a good channel quality for the different UEs. This way, all sharing operators can profit as they get better PRBs and the overall rate can be increased compared to the case of separate PHY schedulers for each VNO.

Another aspect is the multiplexing gain by means of assigning a variable amount of PRBs to each operator, depending on the current load situation.

Hence, Fig. 7 illustrates the sharing of an OFDM air interface between multiple VNOs. The figure illustrates a simple case with a fixed number of PRBs per time slot. In a practical system, however, this will most likely be realized with a more flexible configuration like a guarantee to receive a certain number of PRBs within a certain time period. To realize an OFDM air interface virtualization, reference is made to Y. Zaki, M. A. Khan, L. Zhao, and G. Carmelita, "Realizing the Broker based Dynamic Spectrum Allocation through LTE Virtualization and Uniform Auctioning," in PE-CRN'11: Proceedings of the 2011 Performance Evaluation of Cognitive Radio Networks Workshop, 2011, pp. 1-10, and Y. Zaki, "Wireless Network Virtualization - LTE case study," in Presentation, "Treffen der ITG FG 5.2.1, Technik und Grenzen der Virtualisierung," 2010, pp. 1-29.

The function behind these architectures is that each operator has its own bandwidth that can be used, and a hypervisor is responsible to allocate the PRBs that correspond to this wireless bandwidth to the different VeNBs. This allocation is done based on a number of different pieces of information, e.g. the channel quality of the different UEs, their buffer occupancy, the predefined contracts of the different VNOs, the number of UEs that each VNO has attached to its VeNB at the moment and so on. It is then the task of the per-VNO LTE MAC schedulers to assign the PRBs to their respective UEs.

The prior art procedures related to air interface virtualization are disadvantageous in that a quite inefficient structure is applied due to the fact that the decision where to assign which PRB is performed for each virtual network operator. Hence, in case there are, for example, several virtual network operators within a physical base station (physical eNB), then this means that each of the several virtual network operators performs the decision where to assign which PRB. This represents a very high overhead.

Further problems exist, which are directed to the fact that the prior art requires a very open communication between a hypervisor and individual VeNBs and particularly their MAC schedulers. In these architectures, the hypervisor needs to have insight into a lot of parameters to make the right scheduling decisions.

Therefore, there is a major problem with respect to an inefficient scheduling, as the scheduling of PRBs has to be considered many times.

A further problem is the exposed scheduler logic in the virtual eNB. The way of scheduling is normally considered a business secret of an operator, as the operator does not want other parties to know how he treats its traffic, who its premium users are and so on.

A further problem is the complex information exchange between the schedulers as a lot of information needs to be exchanged to make the scheduling decision in the hypervisor.

It is the object of the present invention to provide an efficient apparatus and method for assigning resource blocks of an air interface.

This object is achieved by an apparatus for assigning resource blocks of an air interface in accordance with claim 1, a method of assigning resource blocks of an air interface in accordance with claim 14 or a computer program in accordance with claim 16.

The present invention is based on the finding that a more efficient procedure is obtained by providing a first quality of service processor, which is configured for assigning priorities to a first group of receivers associated with the first quality of service processor. Furthermore, a second quality of service processor is provided, which is configured for assigning second priorities to a second group of receivers, the second group being different from the first group. The priorities provided by the quality of service processors are the used by a common scheduler for scheduling individual resource blocks to the first group of receivers and the second group of receivers based on the assigned first and second priorities.

This approach makes sure that the scheduling decision is performed only a single time irrespective of how many virtual network operators are taking part in a physical base station. The individual network operators only have to provide priorities to receivers, but they do not perform any scheduling themselves. The scheduling is then commonly done by the single scheduler so that an efficient procedure is obtained.

Furthermore, this architecture allows to keep business secrets actually secret in a physical base station due to the fact that each quality of service processor only requires a binary executable program, but any open programs or source codes are not necessary. Only when there is to be an update regarding the quality of service assignment, a binary program is loaded to a corresponding quality of service processor. Thus, the virtual network apparatus can be sure that their secrets are actually kept secret and are not exchanged from the operator of the physical base station to any competitors. Instead, the operator of the physical base station only has access to the binary programs which, however, cannot be reengineered or only with a very high effort.

Furthermore, the clear separation between priority assignment on the one hand and scheduling of resource blocks on the other hand results in a very small amount of necessary information to be transmitted between entities. The main information required by the scheduler is the priority of a certain receiver and based on this priority the scheduler can then perform its task.

Therefore, the present invention provides a solution to all of the three problems mentioned above due to the architecture consisting of individual quality of service processors for each virtual base station (VeNB), but these individual quality of service processors only provide and actually calculate priorities, and these priorities are then collected by a common or central scheduler performing the scheduling of all resource blocks, i.e. for all virtual network apparatus.

In a preferred embodiment of the present invention, a base station virtualization for an air interface shared between multiple operators is performed. The problem of creating an efficient sharing architecture that keeps the operators' scheduling policy secret is achieved by performing a two-level scheduling architecture composed of a slave scheduler for quality of service decisions which actually means "what is transmitted first?". The second level scheduler provides a master scheduler for the physical layer (PHY) decisions indicating what is transmitted at which frequency.

Preferably, the slave scheduler is loaded to the base station in binary form and executed in a runtime environment. As a result, its scheduling logic is kept secret even in this sharing case.

Therefore, the present invention provides a new scheduler layout for a base station, for example in an OFDM base station, shared between multiple operators, where each operator can hide the details of its scheduling policy. The present invention allows to configure the VeNBs individually, i.e. each virtual network operator (VNO) is able to control its VeNB as independently as possible. A further feature of embodiments of the present invention is that a scalar interface between the QoS scheduler and the PHY scheduler is provided that expresses the proposal of the quality of service schedulers, i.e. the priorities calculated.

Furthermore, it is preferred that the quality of service processor is loaded to the base station already in a compiled, i.e. binary format which, if necessary, could even be in an encrypted format. This makes sure that the virtual network operator does not have to publish its secrets how to perform the scheduling, i.e. how its scheduling logic works.

Furthermore, each of the multiple slave schedulers for each virtual eNB proposes which of the data is to be transmitted in the next scheduling period (quality of service scheduling), and the quality of service processor does not need any information on the current channel state.

However, this information is necessary for the master scheduler that determines, in which physical resource block which piece of data is to be transmitted. The master scheduler does this by respecting the amount of radio layer resources assigned to each VeNB, the different channel qualities of the user equipments, i.e. the first group of receivers and the second group of receivers, and the QoS scheduling proposals, i.e. the priorities calculated by the first quality of service processor and the second quality of service processor.

The preferred invention is particularly advantageous in specific embodiments due to the fact that it allows a virtual network operator to keep its scheduling logic secret. As the quality of service provider is loaded to the base station in binary form or even in an encrypted form, it internal logic is not visible for other virtual network operators.

Furthermore, the improved efficiency of the present invention is obtained by implementing a clear separation in quality of service scheduling on the one hand and physical layer scheduling on the other hand and by performing the quality of service scheduling before performing the physical scheduling. This procedure makes sure that the physical resource scheduling has to be performed only a single time rather than many times. Furthermore, the inventive architecture additionally allows for an efficient resource trading in a competitive configuration.

Preferred embodiments of the present invention are subsequently described with respect to the accompanying drawings, in which:
- Fig. 1: illustrates an apparatus/method for assigning resource blocks of an air interface to a plurality of different receivers in accordance with the present invention;
- Fig. 2: illustrates a preferred embodiment of the apparatus for assigning resource blocks;
- Fig. 3: illustrates a flow chart for performing a preferred verifier operation;
- Fig. 4: illustrates a flow chart for performing a trading procedure in a preferred embodiment of the present invention;
- Fig. 5: illustrates an update procedure for providing binary quality of service processor programs to the quality of service processors in a physical base station having several virtual base stations;
- Fig. 6: illustrates a target configuration, in which one physical base station host multiple base stations from different virtual network operators;
- Fig. 7: illustrates a sharing of an OFDM air interface between multiple virtual network operators;
- Fig. 8: illustrates an overview of a base station architecture with a master scheduler responsible for physical layer scheduling and slave schedulers responsible for quality of service scheduling;
- Fig. 9: illustrates a preferred embodiment for keeping the quality of service scheduling policy secret;
- Fig. 10: illustrates a system design for a market place-like resource trading;
- Figs. 11- 12: illustrate comparison examples for explaining embodiments of the invention;

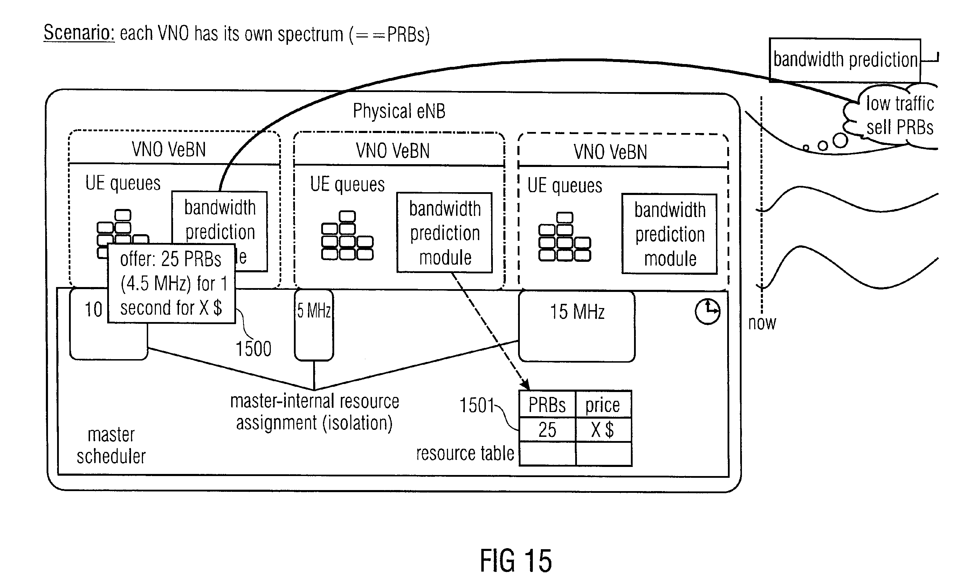

- Figs. 13 - 16: schematic representations of preferred embodiments of the present invention for explaining several features.

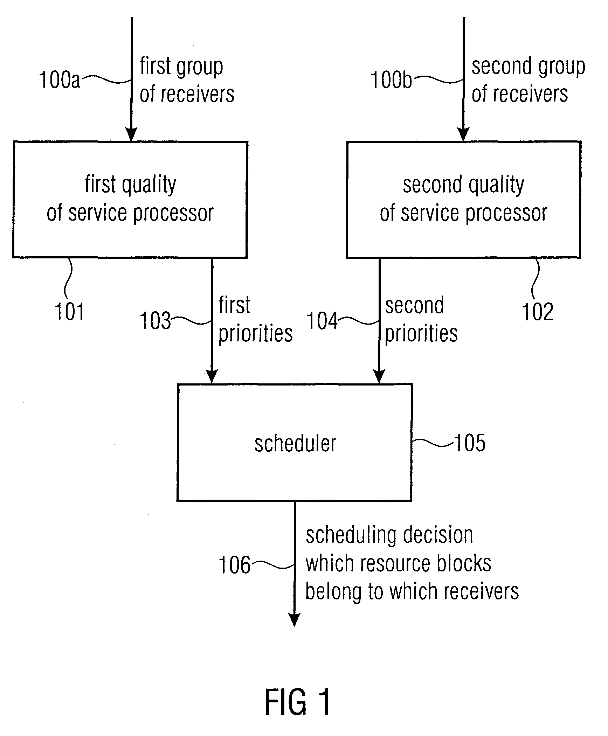

Fig. 1 illustrates an apparatus or a method for assigning resource blocks of an air interface such as an OFDM air interface to a plurality of different receivers. The receivers are grouped into a first group of receivers 100a and a second of receivers 100b. Depending on the implementation of the virtual base station architecture, more than two groups of receivers can exist. A group of receivers is identified in that each receiver of a group of receivers is served by a first virtual network operator and the second group of receivers is served by a second different virtual network operator. Each group of receivers is assigned to a quality of service processor. Therefore, the first quality of service processor 101 hosts the first group of receivers and the second quality of service processor 102 hosts the second group of receivers. The first quality of service processor 101 is configured for assigning priorities to the first group of receivers associated with a first quality of service processor, where these priorities are indicated as first priorities 103. The second quality of service processor 102 is configured for assigning second priorities 104 to a second group of receivers, the second group being different from the first group. Both groups of priorities, i.e. the first priorities 103 and the second priorities 104 are input into a scheduler 105 which is configured for scheduling individual resource blocks to the first group of receivers and the second group of receivers based on the assigned first and second priorities 103, 104. Hence, the scheduler 105 provides a scheduling decision 106 indicating which resource blocks belong to which receivers.

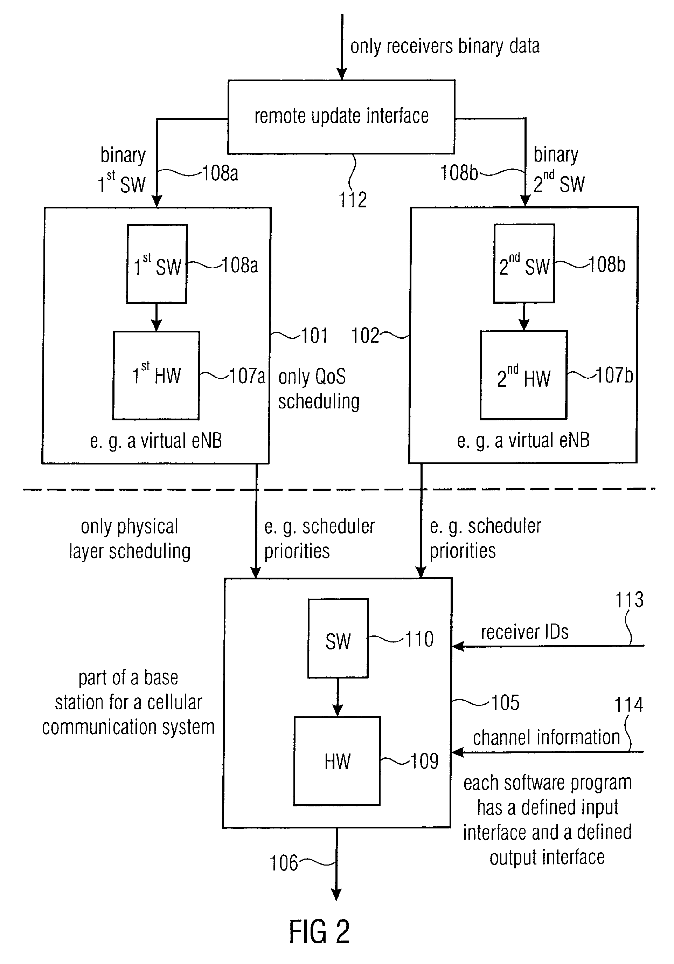

In a preferred embodiment as illustrated in Fig. 2, each quality of service processor 101 has a hardware block 107a for the first quality of service processor and a hardware block 107b for the second quality of service processor. Furthermore, each quality of service processor has a corresponding quality of service software program 108a and 108b, respectively. Furthermore, the scheduler 105 additionally comprises a hardware block 109 and a software module 110. In particular, the first quality of service program 108a and the second quality of service software program 108b are configured as separate software programs, wherein each software program has a defined input interface and a defined output interface. Furthermore, the software program 110 of the scheduler 105 is also configured as a separate software program and the software program 110 for the scheduler 105 additionally has a defined input interface and a defined output interface. Particularly, the output interfaces of the software programs 108a, 108b are configured in such a way that they can communicate with the input interface of the scheduler software program 110. Preferably, the output interfaces of the software programs 108a, 108b only provide scalar priorities, i.e. scalar values indicating, by a number within a certain number range, a certain priority so that, for example, a higher scalar value indicates a higher priority and a lower scalar value indicates a lower priority or vice versa.

Furthermore, the inventive apparatus for assigning resource blocks comprises an input interface 112 for a remote update of software programs such as the software programs 108a, 108b or 110. Furthermore, the remote update interface 112 is configured to receive the first quality of service software program 108a and the second quality of service software program 108b in a binary format rather than as a source code so that an operator of the apparatus illustrated in Fig. 2 cannot parse how the quality of service controlled priority assignment is performed. The remote update interface 112 may receive the software programs 108a, 108b in a plain text binary format or even in an encrypted format. In the latter case, the first quality of service processor 101 and the second quality of service processor 102 would additionally comprise a decryption functionality in order to decrypt the encrypted binary program into a plain text binary program. Secrecy can be assured by pre-storing decryption keys in the processors 101, 102 in a safe way.

Preferably, the first quality of service processor 101 and the second quality of service processor 102 are implemented as a virtual eNB and the first and second quality of service processors 101, 102 and the scheduler 105 are arranged in a base station for a cellular mobile communication system.

Preferably, the scheduler 105 is configured for assigning a resource block to a receiver based on the priority for the receiver and additionally a receiver identity 113 and a wireless transmission channel information 114 for the receiver so that a first receiver having similar channel characteristics as a second receiver is provided with more transmission resources, when the priority for the first receiver is higher than the priority for the second receiver.

In particular, each quality of service processor 101, 102 is configured to determine the priorities for the individual groups of receivers independent from each other.

In an embodiment of the present invention, the first quality of service processor belongs to a first network operator, and the second quality of service processor 102 belongs to a second network operator. Furthermore, the base station in which the elements illustrated in Fig. 1 or Fig. 2 are implemented is owned by an independent third entity or either the first network operator or the second network operator. The first and the second quality of service processors 101, 102 are implemented such that an owner of the base station does not have insight into how the priorities for the receivers are assigned, but is at most able to become aware of the priorities 103, 104 rather than how the priorities have been calculated by the quality of service processors 101, 102.

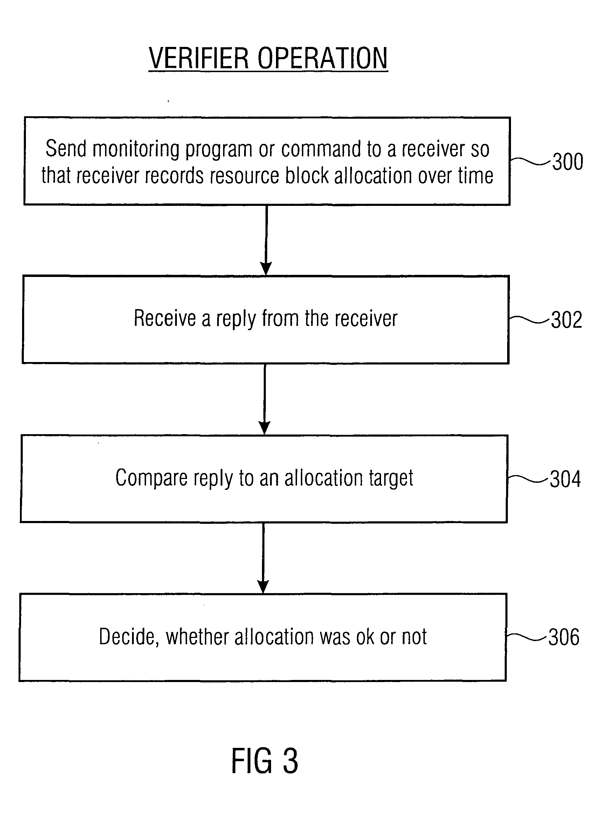

Fig. 3 illustrates a further embodiment of the present invention, in which the first quality of service processor 101 and/or the second quality of service processor 102 comprises an allocation verifier. The allocation verifier is to verify that the scheduler 105 has actually performed a scheduling operation in accordance with the predefined contract. The task of the verifier is to check that a virtual operator gets the amount of physical resource blocks that he has paid for To this end, the verifier is configured for sending a monitoring program or a command for starting a monitoring program already resident in the mobile device/receiver to the receiver of a certain group of receivers so that the receiver records the resource block allocation over a certain period of time. In particular, the first quality of service processor 101 may send such a monitoring program only to receivers of the first group of receivers and the second quality of service processor may send such a monitoring program only to receivers of the second group of receivers.

The verifier is furthermore configured for receiving 302 a reply from the receiver, which was provided with the monitoring program. Furthermore, the verifier is configured for comparing 304 the reply from the at least one receiver to a predetermined allocation target in order to determine whether the resource block allocation done by the scheduler is in a predefined range around the predetermined allocation target or not. The decision whether the resource block allocation actually performed by the scheduler 105 is in the predetermined range or not is performed in the decision step 306, in which it is decided whether the allocation was okay or not, i.e. was in the predefined range around the predetermined allocation target or not. In case step 306 results in a not okay decision, then the verifier will provide an information to the corresponding virtual network operator so that the virtual network operator can contact the owner of the base station in order to make sure that the correction is performed so that the predetermined allocation target is fulfilled for the future.

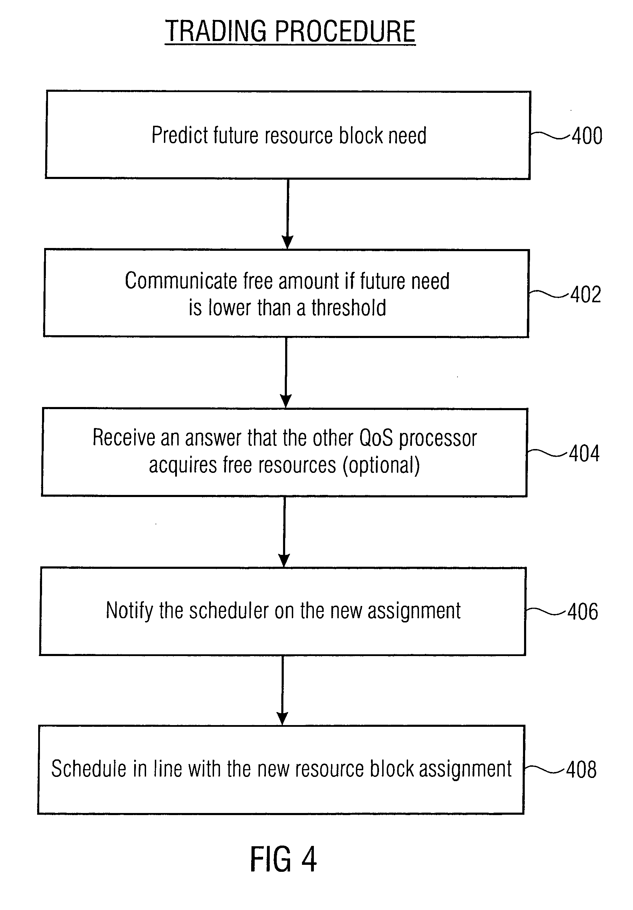

Fig. 4 illustrates a further embodiment of the present invention, in which a trading module is provided within the base station, where this trading module can be implemented as a module separate from the quality of service processors 101, 102 and the scheduler 105. However, the trading module can also be implemented in one of these elements 101, 102, 105, even though an implementation of the trading module separate from the quality of service processors 101, 102 is preferred.

In an embodiment, the first quality of service processor or the second of quality of service processor or the separate trading module is configured to predict a future resource block need as illustrated in step 400 of Fig. 4 illustrating the trading procedure in accordance with a preferred embodiment. In step 402, an amount of free resources is communicated to another quality of service processor or to the separate trading module provided that the future resource block need obtained in step 400 is lower than a predetermined need.

In step 404, an answer from the second quality of service processor or the separate trading module is received saying that the second quality of service processor is willing to acquire at least some of the free resources. Then, in a step 406 the quality of service processor or the separate trading module is performing a notification to the scheduler of the new resource block assignment to the different groups of receivers. Finally, as illustrated in step 408, the scheduler will then schedule the resource blocks in accordance with the new resource block assignment notified by step 406.

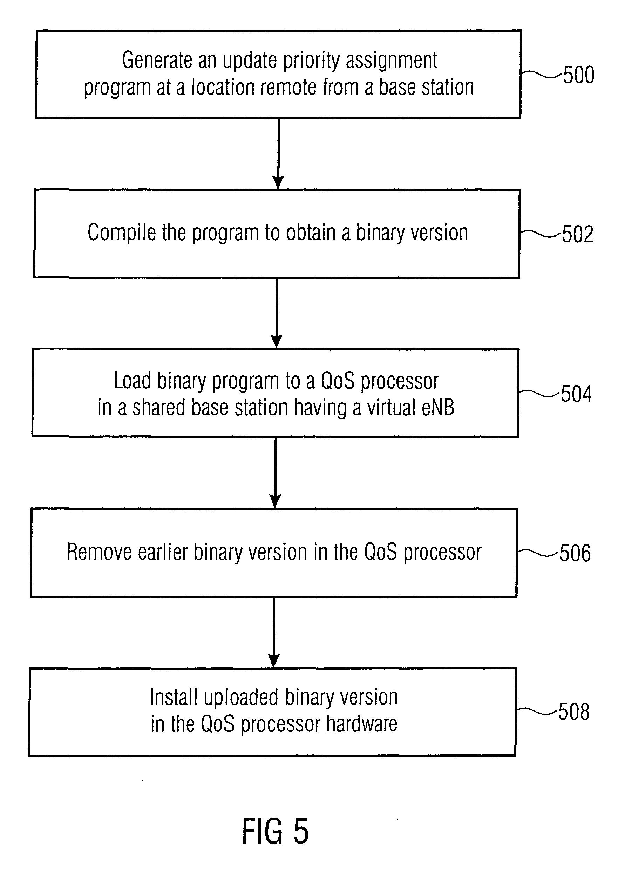

Fig. 5 illustrates a preferred procedure for updating the quality of service processors 101, 102 via the remote update interface 112 of Fig. 2. In step 500, an update priority assignment program is generated at a location remote from the location, where the first quality of service processor or the second quality of service processor are located.

In step 502, a compilation of the program is performed at the remote location in order to obtain a binary version.

Then, in step 504 the program which is now in the binary format is loaded from the remote location to the first quality of service processor or the second quality of service processor via the remote update interface 112 illustrated in Fig. 2. Then, in step 506 an earlier binary version at the first quality of service processor or the second quality of service processor is removed and in step 508 the uploaded binary version is installed in a hardware for implementing the updated first quality of service processor operation or the updated second quality of service processor operation. Depending on the actual implementation of the base station, the step 506 of removing an earlier binary version in the quality of service processor can be omitted when the new binary program can simply override the old binary program, i.e. when the installing operation in step 508 can be performed without an actual removal of the earlier binary version in the quality of service processors 101, 102.

Subsequently, Fig. 7 is discussed in order to discuss an OFDM air interface virtualization as an example for a general air interface virtualization.

In particular, the OFDM air interface is split into physical resource blocks (PRBs), the eNB scheduler is configured to assign PRBs having the corresponding best channel qualities to user equipment (receiver) transmissions. The virtualization is based on the physical resource blocks as illustrated in Fig. 7. Particularly, the example in Fig. 2 indicates that two physical resource blocks are, for a certain time, associated with a first virtual network operator VNO1 of Fig. 6, one PRB is associated to VNO2 and three PRBs are associated with VNO3. Hence, each time slot, which for example last 1 ms, has six PRBs, which are to be distributed to the VNOs in accordance with the exemplary quota of 2:1:3 illustrated in Fig. 7.

Two areas of gains exist. The first gain is the diversity gain, i.e. that each operator gets the best PRBs for his user equipment, i.e. receivers, which represents a win-win situation for all virtual network operators which are placed within the physical base station. The second gain is a multiplexing gain. A variable number of PRBs can be distributed to virtual network operators depending on the load in accordance with the embodiment illustrated with respect to Fig. 4 (trading procedure). In preferred embodiments the present invention provides an efficient architecture that keeps the scheduling policy of the VNO secret, since this scheduling policy of a virtual network operator is typically a very worthy business secret.

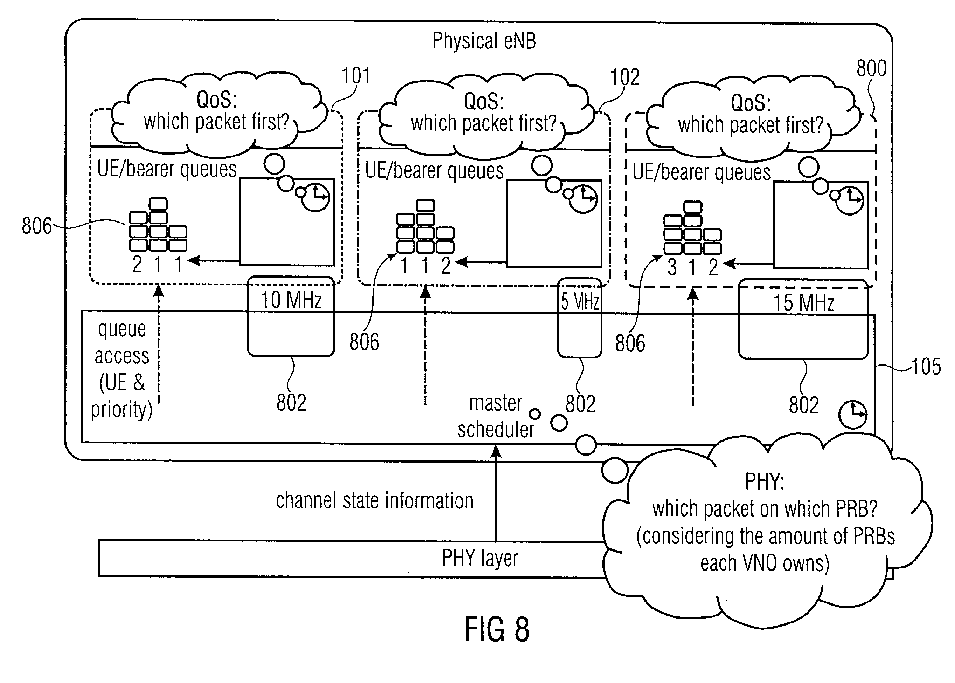

Fig. 8 illustrates a preferred embodiment of the implementation illustrated in Fig. 1 with a third quality of service processor indicated at 800.

Each physical eNB hosts a master scheduler 105 that is responsible for the physical layer scheduling and a number of virtual eNBs indicated at 101, 102, 108 that each contain their own slave scheduler that takes the quality of service decisions. Each of the VeNBs in this architecture has a certain amount of radio layer resources pre-assigned, which is in this example expressed by the black boxes with 10 MHz, 5 MHz and 15 MHz indicated at 802. This corresponds to the frequency resources that each of the operators either owns or has made a long term rental agreement about.

The sequence of scheduling decisions in this embodiment is as follows: New data packets that arrive from each of the operators' core networks are stored in user equipment/bearer queues illustrated at 806. In particular, one queue exist for each receiver or user equipment or for each bearer, in case multiple such bearers exist per user equipment. These queues exist for each of the VeNBs. Therefore, in this embodiment the first quality of service processor comprises a bearer queue for each receiver of the first group of receivers and no bearer queue for a receiver of the second group. Furthermore, the second quality of service processor comprises a bearer queue for each receiver of the second group of receivers and no bearer queue for a receiver of the first group of receivers.

The quality of service processors 101, 102, 800 are configured to assign a priority such as indicated as a scalar value of 2, 1 or 3 in Fig. 8 to an information packet in the bearer queue or to the bearer queue itself based on at least one of the plurality of quality of service parameters for a receiver, the at least one of a plurality of quality of service parameters at least comprising an identity of the receiver, a quality of service class of an information to be transmitted to the receiver or a contract for the receiver. Hence, the slave scheduler has an interface towards his queues, i.e. he has full access to all parameters like QoS class, bearer, user equipment (receiver) identity, ..., if needed. Based on this information, the scheduler then prioritizes which of the data packets is to be transmitted in the next scheduling period. This priority is preferably expressed as a scalar value that can either exist once per queue as depicted in Fig. 8 or can be made for each data packet in the queue. The background behind this second option is that the scheduler might not want to have all packets in a certain queue to have the same priority, such as because packets later in the queue still arrive in time if scheduled in the next period. This leaves the master scheduler more freedom in his decision and thus improves the overall performance.

The master scheduler 105 is able to access the queues of the different VeNBs, where he knows which user equipment the queue belongs to. This is necessary to determine the subcarriers that are best suited for a transmission, as well as the quality of service values assigned by the slave scheduler which express the slave scheduler's priorities. Based on this information as well as the amount of radio layer resources for each of the virtual network operators, the scheduler 105 then takes a decision what physical resource block (PRB) is to be used for which transmission. It is to be noted that the slave scheduler does not exactly know how many bytes can be transmitted in the next scheduling period as this strongly depends on the channel qualities. Thus, all packets may be assigned a default priority, and the slave scheduler will increase the priority of those packets that he considers important. Thus, the master scheduler can select from more data to be transmitted than just the amount of resources available for an operator on the physical layer and can therefore achieve a better result. In this architecture, each quality of service processor is free to implement its own policy independent from the other VeNB's schedulers/QoS processors.

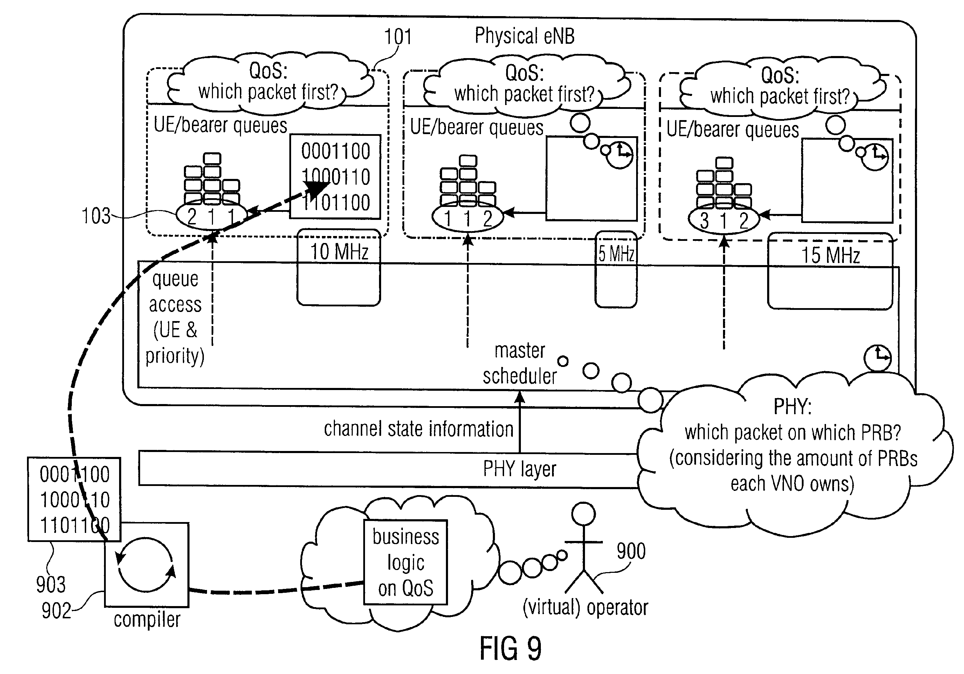

Fig. 9 illustrates an embodiment to keep the quality of service scheduling policy secret. To this end, the virtual operator compiles the logic beforehand and sends it as compiled binary to the virtual base station. Therefore, the virtual operator 900, which is located at a remote place, performs step 500 of Fig. 5, i.e. that an updated priority assignment program is generated. This updated priority assignment program is compiled by a compiler 902, which is also at a remote place with respect to the physical base station and then the binary program illustrated at 903 is loaded to the first quality of service processor 101 and installed so that the first quality of service processor 101 can perform an updated quality of service processing which results in the determination of the first priorities 103, i.e. scalar values for each bearer queue in this embodiment.

Hence, the virtual network operator implements the quality of service scheduling logic by considering the interface available in the base station reading the queue information of incoming packets and attaching the scheduling decision as a simple value to the queues or to the queue contents and compiles it before it is loaded to the runtime environment, i.e. the hardware 107a of the base station. Thus, the scheduling logic is not visible to the owner of the physical base station, making it more difficult to decode the scheduling logic. To this end, the interface 112 (Fig. 2) in the physical base station is provided that allows the virtual operator to remotely operate the scheduler for his VeNB.

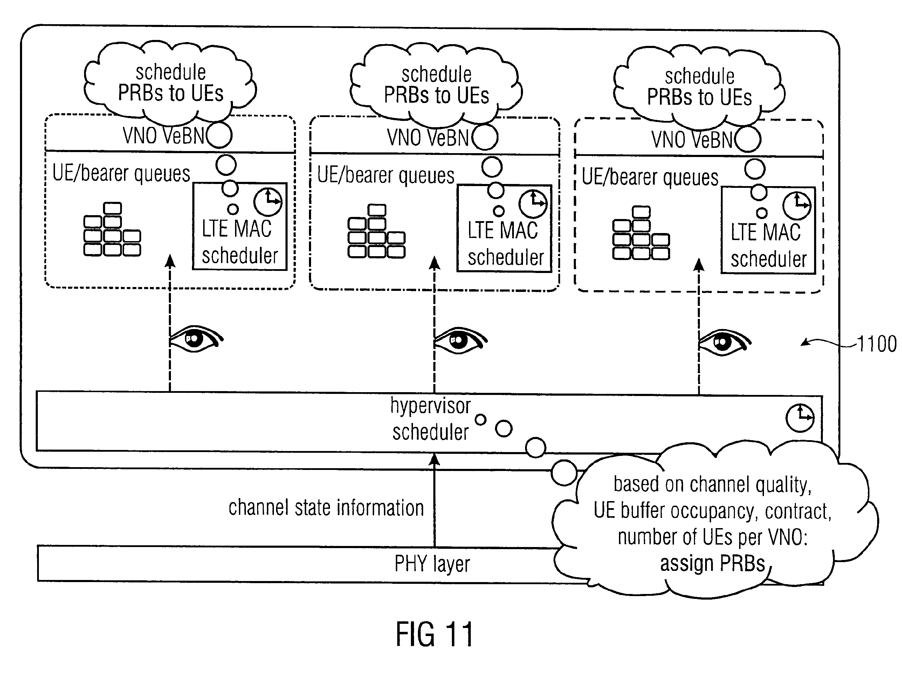

Fig. 11 illustrates a scenario in which the scheduling decision performed by the hypervisor which performs an assignment of physical resource blocks based on channel quality, user equipment buffer occupancy, contract and number of user equipments per virtual network operator is fully visible to all network operators indicated by the schematic "eye" representation 1100. In this scenario, in which there is an LTE MAC scheduler per virtual network operator, each virtual network operator can gain a full visibility over the trade secrets performed by the individual virtual network operators which is non-optimum as discussed before.

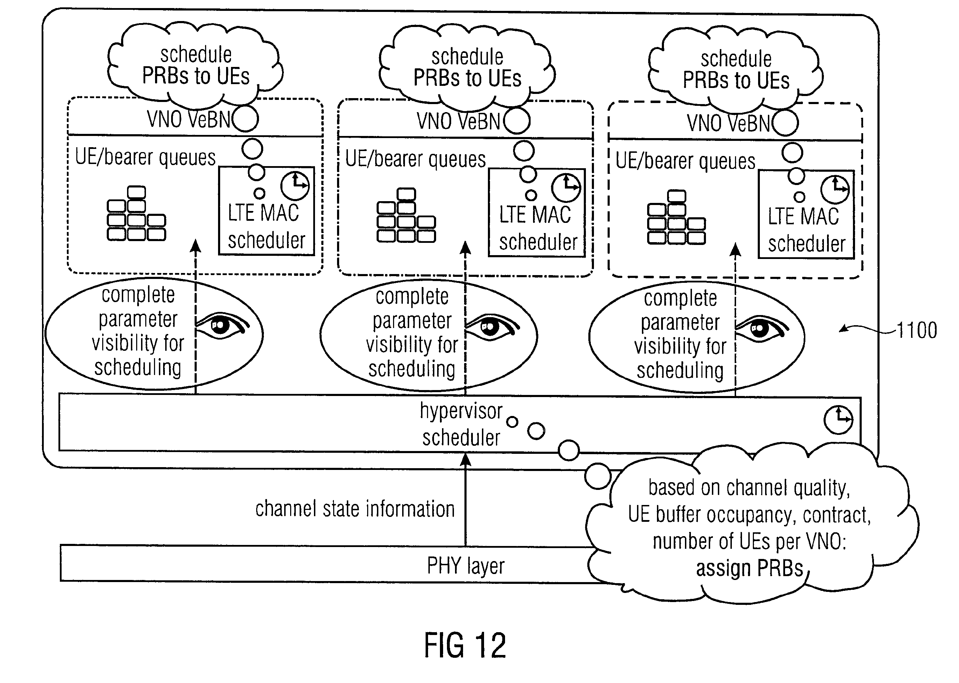

This is further indicated in Fig. 12, since Fig. 12 illustrates that there is a complete parameter visibility for scheduling, which is disadvantageous due to the fact that quality of service policy is a virtual network operator business secret, but in this scenario this is exposed to the PeNB owner.

Furthermore, the Fig. 12 scenario is also inefficient in that both schedulers, i.e. the hypervisor scheduler on the one hand and the LTE MAC schedulers on the other hand have to consider PRB scheduling.

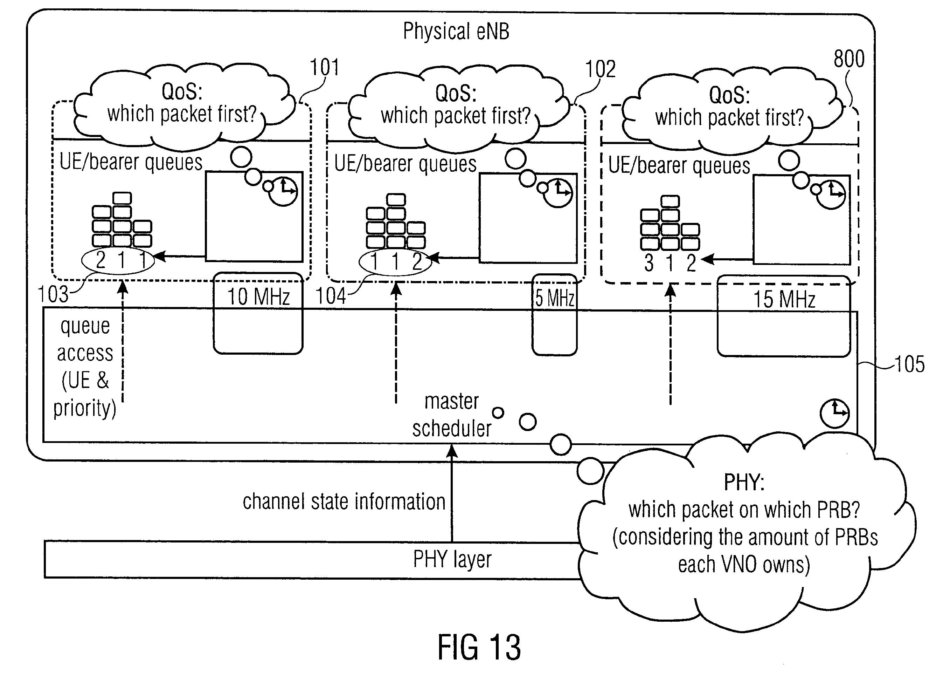

To this end, the present invention relies on the fact that the quality of service scheduling on the one hand and the physical layer scheduling on the other hand is split as illustrated in Fig. 13. Specifically, the quality of service processors 101, 102, 800 decide on a quality of service question, i.e. which packet is to be transmitted first, and the scheduler 105 then decides which packet is to be transmitted on which PRB considering the amount of PRBs each virtual network operator owns. The result of this procedure is the set of priorities 103 and 104.

The present invention is advantageous in that the problem of the exposed scheduler logic which has not be considered so far in the prior art is addressed. Furthermore, the present invention provides revenues due to the fact that the base station sharing results in three areas of savings/revenues. One area is money saving due to a hardware sharing, a site sharing and an energy saving. Furthermore, a diversity gain is obtained, since each operator gets the best physical resource blocks for its user equipments. Finally, a multiplexing gain is obtained, since additional PRBs can be used if not needed by a different virtual network operator.

The present invention can also be considered to comprising a hierarchical scheduler for a virtualized OFDM base station composed of a master scheduler that schedulers the physical resource blocks, multiple slave schedulers for virtual base stations that schedule transmission timings according to packet/user equipment priorities, where the slave schedulers can be executed in a runtime environment and are loaded to the base station in binary form. A further embodiment is that the interface between the slave and the master is a scalar value that expresses the slave's scheduling decision.

The embodiments described so far have two additional aspects that are beneficial. These beneficial aspects are due to the fact that the inventive architecture provides the ability to place code inside the VeNB, i.e., that the host internal logic is not visible to the owner of the physical base station and that there is a two-level design of a slave and master scheduler for virtualization.

One preferred implementation is the resource assignment verification as illustrated in the context of Fig. 3. The VNOs in the embodiment have their own spectrum and it is the task of the PeNB to make sure that each VeNB gets an amount of physical resource blocks equal to the spectrum that the virtual network operator added to the spectrum pool. The following example is considered. One PRB in LTE corresponds to 180 kHz for 1 ms, thus an operator with a 10 MHz of spectrum expects to receive 10 MHz/180 kHz is equal to 55 physical resource blocks per millisecond on average. However, the physical base station operator and the virtual base station operator can belong to different business entities and the physical network operator might not adhere to this agreement. Thus, the PeNB could give more radio resources to the VeNB of a competitor who secretly pays the PeNB to do so. In this scenario, the present invention provides a simple mechanism to check that the VeNB gets an adequate amount of resources. As illustrated in Fig. 3, the VNO adds a piece of code along with the binary slave scheduler. This code requests from the attached user equipment to check how much PRBs they did get assigned in a scheduling period. The user equipments send this information back, hidden in a normal packet. Then, another piece of code in the pre-compiled part of the VeNB can check whether the sum of all assigned PRBs corresponds to his resources. With this mechanism, the VNO has an easy mechanism to check that the VNO gets enough resources and is treated in a fair way by the PeNB. Naturally, this procedure requires support from the user equipment side, as the user equipments serve as "independent observers".

A further aspect of the present invention is related to the resource trading feature as illustrated in Fig. 4. This feature addresses the problem of how to realize spectrum sharing in a competitive environment. In accordance with the present invention, the spectrum is owned by the (virtual) operators, but can be rented to other operators on the same base station if not needed. The owner proposes a rental price, and the renter can either accept or not. This creates a market place where the price varies depending on spectrum offers and demands, thus creating a competitive environment.

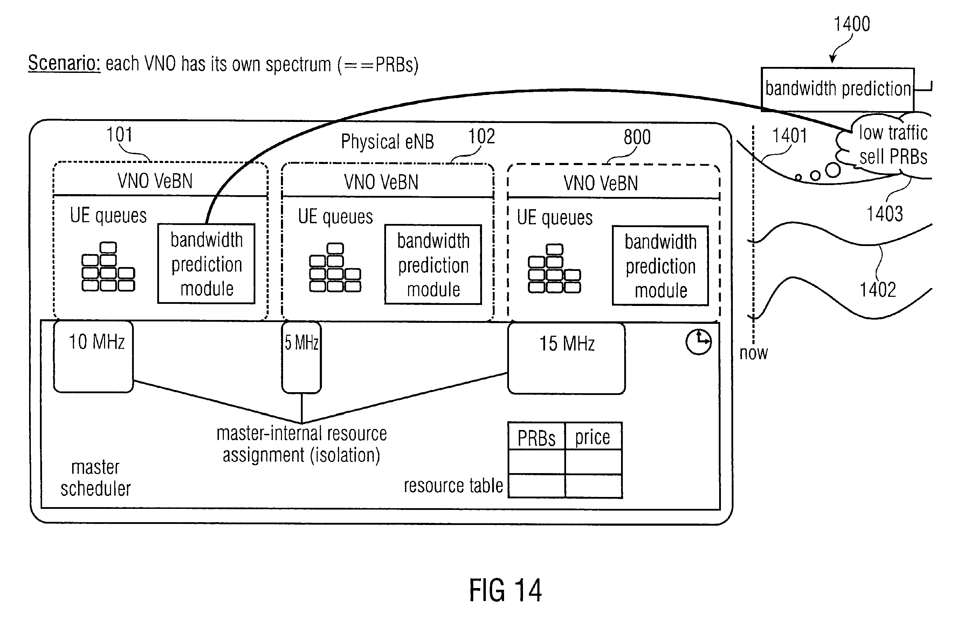

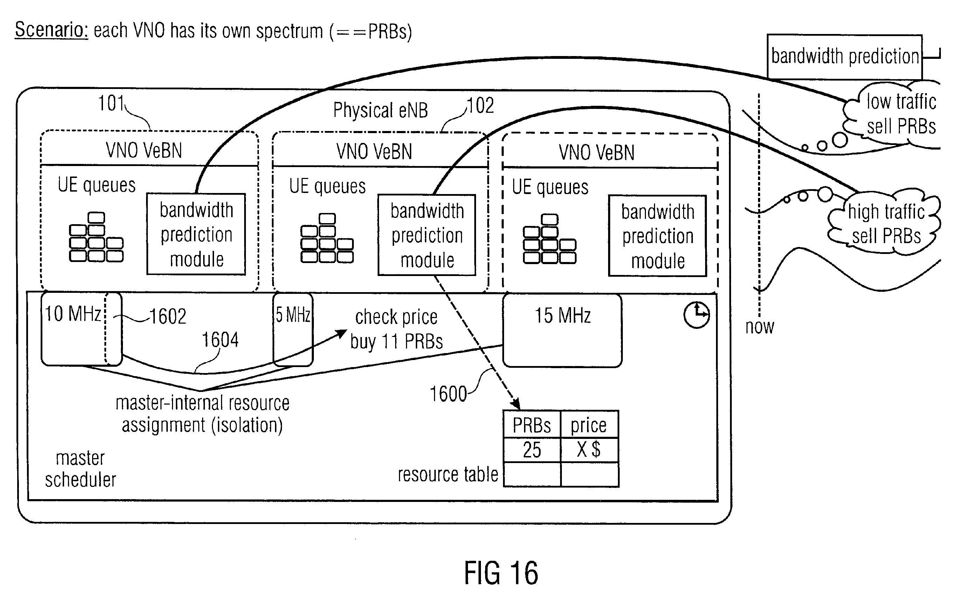

As illustrated in Fig. 14, there is a master-internal resource assignment giving, for example, the first quality of service processor 101 to a 10 MHz bandwidth, the second quality of service processor 102 a 5 MHz bandwidth and the third quality of service processor 800 a bandwidth of 15 MHz. To the right in Fig. 14 a bandwidth prediction scenario 1400 is illustrated, which indicates that for the first quality of service processor the bandwidth prediction results in a reduced bandwidth requirement indicated in 1401. On the other hand, the bandwidth prediction indicates, for the second quality of service processor 102, a higher bandwidth requirement as illustrated by the ascending curve 1402 for the second quality of service processor in Fig. 14. Hence, the first quality of service processor 101 might consider selling physical resource blocks as indicated at 1403. This is indicated at 1501 in the resource table. As illustrated in Fig. 16, the second quality of service processor 102 checks the price at 1600 and decides to buy 11 physical resource blocks. This means that a certain amount of bandwidth indicated at 1602 is now migrated from the first quality of service processor 101 to the second one so that the bandwidth of the first quality of service processor and the bandwidth of the second quality of service processor 102 increases as indicated by arrow 1604.

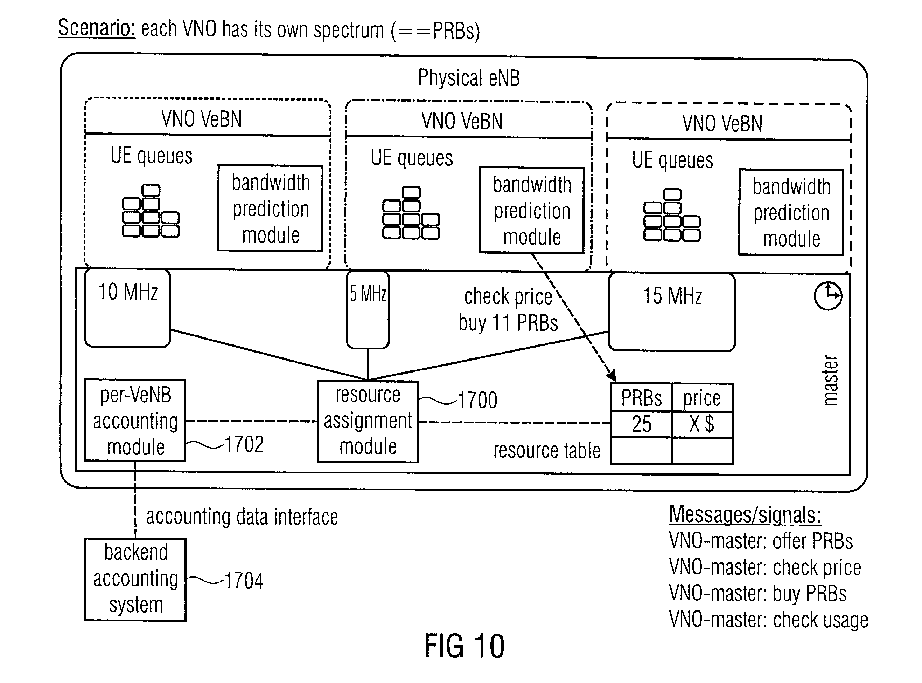

As illustrated in Fig. 10, this requires several messages/signals. One message/signal is that the VNO offers to the master or via a separate trading module physical resource blocks. Then, the other VNO checks the price and then the other VNO buys the physical resource blocks and then the VNO checks the usage. The new resource assignment is enforced by the resource assignment module 1700 and additionally it is preferred to provide a per-VeNB accounting module 1702 and a back end accounting system 1704 which operates with block 1702 via an accounting data interface. Hence, the VNO-master/check usage allows the VNO to check resource usage. The background is that if all resources have been sold by a VNO in the last offer period, this means that there is a high demand and therefore the VNO selling resources in the next offer period might think of increasing the price.

The present invention in the above described above trading embodiment is advantageous in that the VNO itself can decide whether the spectrum is traded or not and which price is set. Furthermore, the trading is fair as it happens on the "public" market place. Furthermore, this procedure makes sure that a non-usage of resources due to the distribution of the common resources to individual network operators is reduced as far as possible. Therefore, the present invention allows competitors to share base stations in order to obtain cost savings. At the same time, the market mechanisms are still in place and money can be gained by selling resources. Therefore, the trading of radio layer resources on very small time scales in a competitive environment is achieved.

Therefore, the present invention in a certain embodiment can also be considered to be a method for sharing OFDM radio resources in a base station shared between multiple operators, wherein each operator is assigned a part of the spectrum and a first operator can rent a fraction of this spectrum to a second operator. In a further embodiment, the operators predict their future bandwidth needs and a first operator communicates free spectrum resources to the second operator together with the renting price, and the second operator communicates back the amount of spectrum he wants to rent. In a further embodiment, a system for sharing OFDM radio resources between at least a first and a second operator using the same base station is provided, where as assignment of radio resources to the operators takes place, a trading module is provided that accepts resource offers and makes these offers visible to the other operators, and a shift of resources from the first to the second operator in case the second operator has made a rental agreement with the first operator is performed.

In view of this, the present invention realizes a statistical multiplexing in order to obtain an additional degree of freedom in spectrum assignment for the master scheduler. At a certain point in time, it may happen that not all PRBs are used by a VeNB, while in parallel another VeNB has more users than he can serve with his own PRB resources. While it would be good in such a situation to let the second VeNB use the PRBs left unused by the first, it may happen that the two operators owning the VeNBs are competitors. In such a scenario, a trading of resources between the VeNBs is the right approach.

The trading of spectrum has received significant attention in the research community [7], e.g. in the form of either a hierarchical, centralized approach or a game theory based, decentralized approach. However, these approaches did not consider that the trading partners share the same hardware. Combining spectrum resource flexibility with such base station virtualization has been first considered by Zaki et al. [3] where the authors propose an approach where all spectrum resources are owned by the PeNB and the VNOs enter a regular auction for this spectrum. The scenario for this invention is different as the spectrum resources are assigned to the VeNBs rather than to the PeNB, thus the proposed auctioning solution does not work.

Therefore, a different, marketplace-like trading mode is provided in which the VeNBs can offer resources and trade them with each other. An overview is given in Fig. 8, technically it is realized as follows:
- the VeNBs make predictions of their future bandwidth needs
- and can offer their unused spectrum resources via a resource table in the PeNB to other VeNBs for a certain price X
- the other VeNBs can consult the resource table to check price and availability of PRBs and can buy these resources at the offered price if desired
- the resource assignment module in the PeNB keeps track of such trades and adapts the spectrum assignments accordingly

This trading becomes possible through our two level scheduler architecture, where the PHY i.e. master scheduler is responsible to manage the radio layer resources. Furthermore, together with the first aspect described above and illustrated in Fig. 3, it becomes possible to control the results of the PeNB resource trading.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory or tangible data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### References

[1] Y. Zaki, L. Zhao, C. Georg, and A. Timm-giel, "A Novel LTE Wireless Virtualization Framework," in Monami'10: Proceedings of the Second International ICST Conference on Mobile Networks And Management, 2010, no. 1.
[2] Y. Zaki, L. Zhao, C. Georg, and A. Timm-giel, "LTE mobile network virtualization - Exploiting multiplexing and multi-user diversity gain," Mobile Networks and Applications, vol. 16, no. 4, pp. 424-432, Jun. 2011.
[3] Y. Zaki, M. A. Khan, L. Zhao, and G. Carmelita, "Realizing the Broker based Dynamic Spectrum Allocation through LTE Virtualization and Uniform Auctioning," in PE-CRN'11: Proceedings of the 2011 Performance Evaluation of Cognitive Radio Networks Workshop, 2011, pp. 1-10.
[4] Y. Zaki, "Wireless Network Virtualization - LTE case study," in Presentation, "Treffen der ITG FG 5.2.1, Technik und Grenzen der Virtualisierung," 2010, pp. 1-29.
[5] A. Pokhariyal et al., "HARQ Aware Frequency Domain Packet Scheduler with Different Degrees of Fairness for the UTRAN Long Term Evolution," in VCT2007-Spring: Proceedings of the IEEE 65th Vehicular Technology Conference, 2007, pp. 2761-2765.
[6] S. Meier et al., "Provisioning and Operation of Virtual Networks," Electronic Communications of the EASST, vol. 37, pp. 1-12, 2011.
[7] T. Yamada, D. Burgkhardt, I. Cosovic, and F. K. Jondral, "Resource Distribution Approaches in Spectrum Sharing Systems," EURASIP Journal on Wireless Communications and Networking, vol. 2008, pp. 1-15, 2008.

## Claims

1. Apparatus for assigning resource blocks of an air interface to a plurality of different receivers, comprising:
a first quality of service processor (101), wherein the first quality of service processor (101) is configured for assigning priorities to a first group of receivers associated with the first quality of service processor (101);
a second quality of service processor (102), wherein the second quality of service processor (102) is configured for assigning second priorities to a second group of receivers, the second group being different from the first group; and
a scheduler (105) for scheduling individual resource blocks to the first group of receivers and the second group of receivers based on the assigned first and second priorities.

2. Apparatus of claim 1,
wherein the first quality of service processor (101) comprises a first hardware (107a) and a first quality of service software program (108a) configured for being executed on the first hardware;
wherein the second quality of service processor (102) comprises a second hardware (107b) and a second quality of service software program (108b) configured for being executed on the second hardware;
wherein the scheduler (105) comprises a hardware (109) and a scheduling software program (110),
wherein the first quality of service software program, the second quality of service software program and the scheduling software program are configured as separate software programs, each software program having a defined input interface and having a defined output interface.

3. Apparatus of claim 2, further comprising an input interface (112) for a remote update of a software program,
wherein the input interface (112) is configured to receive the first quality of service software program and the second quality of service software program in a binary format rather than as a source code, so that an operator of the apparatus cannot parse how the quality of service controlled priority assignment is performed.

4. Apparatus in accordance with one of the preceding claims,
wherein the first quality of service processor (101) and the second quality of service processor (102) are configured to output the priorities (103, 104) for the receivers to the scheduler (105) in a scalar form.

5. Apparatus in accordance with one of the preceding claims,
wherein the first quality of service processor (101) and the second quality of service processor (102) are implemented as virtual eNBs, and
wherein the first and the second quality of service processor (102)s and the scheduler (105) are arranged in a base station (600) for a cellular mobile communication system.

6. Apparatus in accordance with one of the preceding claims,
wherein the first quality of service processor (101) comprises at least one bearer queue for each receiver of the first group of receivers and no bearer queue for a receiver of the second group,
wherein the second quality of service processor (102) comprises at least one bearer queue for each receiver of the second group of receivers and no bearer queue for a receiver of the first group of receivers,
wherein the quality of service processors are configured to assign a priority to an information packet in the bearer queue or to the bearer queue itself based on at least one of a plurality of quality of service parameters for a receiver, the at least one of a plurality of quality of service parameters at least comprising an identity of the receiver, a quality of service class of an information to be transmitted to the receiver or a contract for the receiver.

7. Apparatus in accordance with one of the preceding claims,
wherein the scheduler (105) is configured for assigning a resource block to a receiver based on the priority for the receiver, a receiver identity and a wireless transmission channel for the receiver, so that a first receiver having similar channel characteristics as a second receiver is provided with more transmission resources, when the priority for the first receiver is higher than the priority for the second receiver, if resources are limited.

8. Apparatus in accordance with one of the preceding claims,
wherein each of the quality of service processors is configured to determine the priorities (103, 104) for the individual groups of receivers independent from each other.

9. Apparatus in accordance with one of the preceding claims,
wherein each quality of service processor is associated with a specified number of resource blocks, wherein the number of resource blocks of the group of the first quality of service processor (101) is different from the number of resource blocks of the group of the second quality of service processor (102), and
wherein the scheduler (105) is configured to only schedule resource blocks to the first group of users up to the specified number of resource blocks of the first quality of service processor (101), wherein the actual frequency associated with the resource blocks is not predetermined so that the scheduler (105) is configured to freely allocate resource blocks to any receivers provided that the specified numbers are maintained.

10. Apparatus in accordance with one of the preceding claims,
wherein the quality of service processors are implemented to perform quality of service scheduling and to not perform physical layer scheduling, and
wherein the scheduler (105) is configured to perform physical layer scheduling and to not perform quality of service scheduling.

11. Apparatus in accordance with one of the preceding claims, which is implemented in a base station,
wherein the first quality of service processor (101) belongs to a first network operator, wherein the second quality of service processor (102) belongs to a second network operator,
wherein the base station is owned by a third entity or either the first network operator or the second network operator, and
wherein the first and the second quality of service processors (101, 102) are implemented such that an owner of the base station does not have an insight into how the priorities for the receivers are assigned but is, at most, able to become aware of the priorities rather than how the priorities have been calculated by the quality of service processors.

12. Apparatus in accordance with one of the preceding claims,
wherein the first or the second quality of service processor (102) comprises an allocation verifier configured for:
sending a program or a command to a receiver of the corresponding group of receivers, the program or command being configured to trigger the receiver to record its resource block assignment over a certain period of time; and
a comparator for comparing the reply to a predetermined allocation target to determine, whether the resource block allocation done by the scheduler (105) is in a predefined range around the predetermined allocation target.

13. Apparatus in accordance with one of the preceding claims,
wherein each of the quality of service processors comprises a communication interface to a different quality of service processor or a separate trading module,
wherein the first quality of service processor (101) or the separate trading module is configured to
predict (400) a future resource block need;
communicate (402) an amount of free resources to another quality of service processor or to the separate trading module provided that the future resource block need is lower than a predetermined need; and
receiving (404) an answer from the second quality of service processor (102) or the separate trading module that the second quality of service processor (102) acquires at least some of the free resources,
wherein at least one of the quality of service processors or the separate trading module is configured to notify (406) the scheduler (105) of a new resource block assignment to the different groups of receivers, and
wherein the scheduler (105) is configured to schedule the resource blocks in accordance with the new resource block assignment notified.

14. Method of assigning resource blocks of an air interface to a plurality of different receivers, comprising:
assigning first priorities to a first group of receivers associated with a first quality of service processor (101);
assigning second priorities to a second group of receivers associated with a second quality of service processor (102), wherein the second group of receivers is different from the first group of receives; and
scheduling individual resource blocks to the first group of receivers and the second group of receivers based on the assigned first and second priorities.

15. Method of claim 14, further comprising:
generating (500) an updated priority assignment program at a location remote from a location where the first quality of service processor (101) or the second quality of service processor (102) are located;
compiling (502) the priority assignment program at the remote location to obtain a binary program;
loading (504) the program in the binary format from the remote location to the first quality of service processor (101) or the second quality of service processor (102);
removing (506) an earlier binary version at the first quality of service processor (101) or the second quality of service processor (102); and
installing (508) the uploaded binary version in a hardware for implementing an updated first quality of service processor (101) operation or an updated second quality of service processor (102) operation.

16. Computer program comprising instructions for performing a program of one of claims 14 or 15.
